Europäisches Patentamt

European Patent Office

Office européen des brevets

(19)

(11) **EP 1 062 764 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(21) Anmeldenummer: **99914397.7**

(22) Anmeldetag: **02.02.1999**

(51) Int Cl.7: **H04L 9/30**

(86) Internationale Anmeldenummer:
**PCT/DE99/00278**

(87) Internationale Veröffentlichungsnummer:
**WO 99/043124 (26.08.1999 Gazette 1999/34)**

(54) **VERFAHREN UND VORRICHTUNG ZUR KRYPTOGRAPHISCHEN BEARBEITUNG ANHAND EINER ELLIPTISCHEN KURVE AUF EINEM RECHNER**

ELLIPTIC CURVE CRYPTOGRAPHIC PROCESS AND DEVICE FOR A COMPUTER

PROCEDE ET DISPOSITIF DE TRAITEMENT CRYPTOGRAPHIQUE FONDE SUR UNE COURBE ELLIPTIQUE ET REALISE SUR UN ORDINATEUR

(84) Benannte Vertragsstaaten:
**AT CH DE ES FR GB IT LI SE**

(30) Priorität: **18.02.1998 DE 19806825**

(43) Veröffentlichungstag der Anmeldung:
**27.12.2000 Patentblatt 2000/52**

(73) Patentinhaber: **Infineon Technologies AG**
**81669 München (DE)**

(72) Erfinder:
• **HESS, Erwin**
**D-85521 Ottobrunn (DE)**
• **GEORGIADES, Jean**
**D-80805 München (DE)**

(74) Vertreter: **Hermann, Uwe, Dipl.-Ing.**
**Epping, Hermann & Fischer**
**Postfach 12 10 26**
**80034 München (DE)**

(56) Entgegenhaltungen:
**US-A- 5 442 707          US-A- 5 497 423**

• **MIYAJI A: "ELLIPTIC CURVES SUITABLE FOR CRYPTOSYSTEMS" IEICE TRANSACTIONS ON FUNDAMENTALS OF ELECTRONICS, COMMUNICATIONS AND COMPUTER SCIENCES, Bd. E77-A, Nr. 1, 1. Januar 1994 (1994-01-01), Seiten 98-104, XP000439669 ISSN: 0916-8508**

**Beschreibung**

Die Erfindung betrifft ein Verfahren und eine Anordnung zur kryptographischen Bearbeitung anhand einer elliptischen Kurve auf einem Rechner.

Ein endlicher Körper heißt Galois-Feld. Zu den Eigenschaften und zur Definition des Galois-Feldes sei auf [3] verwiesen.

Mit der weiten Verbreitung von Computernetzen und zugehörigen Anwendungen, die über elektronische Kommunikationssysteme (Kommunikationsnetze) abgewickelt werden, werden zunehmend wachsende Anforderungen an die Datensicherheit gestellt. Der Aspekt der Datensicherheit berücksichtigt u.a.

- die Möglichkeit eines Ausfalls der Datenübertragung,
- die Möglichkeit korrumpierter Daten,
- die Authentizität der Daten, also die Feststellbarkeit und die Identifikation eines Absenders und
- den Schutz der Vertraulichkeit der Daten.

Unter einem "Schlüssel" werden Daten verstanden, die bei der kryptographischen Bearbeitung Verwendung finden. Aus Public-Key-Verfahren [4] ist bekannt, einen geheimen und einen öffentlichen Schlüssel einzusetzen.

Ein "Angreifer" ist eine nichtautorisierte Person mit dem Ziel, an den Schlüssel zu gelangen.

Insbesondere in einem Rechnernetz, in zunehmenden Maße aber auch in portablen Medien, z.B. einem Mobiltelefon oder einer Chipkarte, ist sicherzustellen, daß ein abgespeicherter Schlüssel auch dann nicht zugänglich ist, wenn ein Angreifer sich des Rechners, des Mobiltelefons oder der Chipkarte bemächtigt.

Um ausreichende Sicherheit kryptographischer Verfahren zu gewährleisten, werden Schlüssel, insbesondere bei asymmetrischen Verfahren, jeweils mit Längen von mehreren 100 Bits bestimmt. Ein Speicherbereich eines Rechners oder portablen Mediums ist zumeist knapp bemessen. Eine Länge eines in einem solchen Speicherbereich abgelegten Schlüssels von mehreren 100 Bits verringert den freien Speicherplatz auf dem Rechner bzw. dem Medium, so daß nur wenige solcher Schlüssel auf einmal abgespeichert werden können.

Aus [1], [2], [5] und [6] ist eine elliptische Kurve und deren Anwendung bei der kryptographischen Bearbeitung bekannt.

Die Aufgabe der Erfindung besteht darin, ein Verfahren zur kryptographischen Bearbeitung anhand mindestens einer elliptischen Kurve auf einem Rechner anzugeben, wobei weniger Speicherplatz benötigt wird.

Diese Aufgabe wird mit einem Verfahren und einer Vorrichtung mit den Merkmalen der Patentansprüche 1 beziehungsweise 9 gelöst.

Es wird ein Verfahren zur kryptographischen Bearbeitung anhand mindestens einer elliptischen Kurve auf einem Rechner angegeben, bei dem die elliptische Kurve in einer ersten Form vorgegeben wird, wobei mehrere erste Parameter die elliptische Kurve in der ersten Form bestimmen. Die elliptische Kurve wird in eine zweite Form transformiert, indem mehrere zweite Parameter bestimmt werden, wobei mindestens einer der zweiten Parameter in seiner Länge gegenüber einem der ersten Parameter verkürzt wird. Die elliptische Kurve nach der Transformation, also in der zweiten Form, wird zur kryptographischen Bearbeitung verwendet.

Durch die signifikante Verkürzung eines der ersten Parameter ergibt sich eine Einsparung eines für diesen Parameter bereitzustellenden Speicherbereichs. Da der Speicherbereich, z.B. auf einer Chipkarte, eng bemessen ist, erreicht man durch die Einsparung mehrerer 100 Bit für jeden verkürzten Parameter freien Speicherplatz z.B. zum Abspeichern eines weiteren geheimen Schlüssels. Durch die Verkürzung des jeweiligen Parameters bleibt die Sicherheit des kryptographischen Verfahrens trotzdem gewährleistet.

Bei Verwendung einer elliptischen Kurve in einem kryptographischen Verfahren steigt der Aufwand für einen Angreifer, den Schlüssel zu ermitteln, exponentiell mit dessen Länge.

Dabei kann die erste Form der elliptischen Kurve bestimmt sein durch:

$$y^2 = x^3 + ax + b \text{ über } GF(p) \tag{1}$$

wobei

GF(p)     ein Galois-Feld mit p Elementen und
x,y,a,b    Elemente des Körpers GF(p)

bezeichnen.

Die später verwendete Bezeichnung "mod p" bezeichnet einen Spezialfall für das Galois-Feld, nämlich die natürlichen Zahlen kleiner p. "mod" steht für MODULO und umfaßt eine Ganzzahldivision mit Rest.
Die Erfindung besteht darin, daß die zweite Form der elliptischen Kurve bestimmt ist durch

$$y^2 = x^3 + c^4ax + c^6b \text{ über GF(p)} \tag{2}$$

wobei c eine Konstante bezeichnet.
Zur Einsparung von Speicherplatz wird Gleichung (1) in Gleichung (2) transformiert und eine die elliptische Kurve gemäß Gleichung (2) kennzeichnende Größe verkürzt.
Die Erfindung besteht weiterhin darin, den Parameter a zu verkürzen, indem die Konstante c derart gewählt wird, daß

$$c^4a \bmod p \tag{3}$$

deutlich kürzer wird als die anderen die elliptische Kurven nach Gleichung (2) beschreibenden Parameter. Durch diese Verkürzung benötigt der Parameter entsprechend weniger Speicherplatz.
Auch ist es eine Weiterbildung, das Verfahren in einer der folgenden Anwendungen einzusetzen:

- Verschlüsselung bzw. Entschlüsselung:

  Daten werden von einem Sender verschlüsselt - mittels symmetrischem oder asymmetrischem Verfahren - und auf der Gegenseite bei einem Empfänger entschlüsselt.

- Schlüsselvergabe durch eine Zertifizierungsinstanz:

  Eine vertrauenswürdige Einrichtung (Zertifizierungsinstanz) vergibt den Schlüssel, wobei sichergestellt werden muß, daß der Schlüssel von dieser Zertifizierungsinstanz stammt.

- digitale Signatur bzw. Verifikation der digitalen Signatur:

  Ein elektronisches Dokument wird signiert und die Signatur dem Dokument angefügt. Bei dem Empfänger kann anhand er Signatur festgestellt werden, ob auch wirklich der gewünschte Sender unterschrieben hat.

- asymmetrische Authentikation:

  Anhand eines asymmetrischen Verfahrens kann ein Benutzer seine Identität nachweisen. Vorzugweise geschieht das durch Codierung mit einem entsprechenden geheimen (privaten) Schlüssel. Mit dem zugehörigen öffentlichen Schlüssel dieses Benutzers kann jeder feststellen, daß die Codierung wirklich von diesem Benutzer stammt.

- Verkürzen von Schlüsseln:

  Eine Variante der kryptographischen Bearbeitung umfaßt das Verkürzen eines Schlüssels, welcher Schlüssel bevorzugt für weitergehende Verfahren der Kryptographie verwendet werden kann.

Ferner ist eine Vorrichtung angegeben, die eine Prozessoreinheit aufweist, die derart eingerichtet ist, daß eine elliptische Kurve in einer ersten Form vorgegeben wird, wobei mehrere erste Parameter die elliptische Kurve bestimmen, und daß die elliptische Kurve in eine zweite Form transformiert wird, indem mehrere zweite Parameter bestimmt werden, wobei mindestens einer der zweiten Parameter in seiner Länge gegenüber den ersten Parameter verkürzt wird. Schließlich wird die elliptische Kurve in der zweiten Form zur kryptographischen Bearbeitung bestimmt.
Diese Vorrichtung kann eine Chipkarte sein, die einen geschützten und einen nicht geschützten Speicherbereich aufweist, wobei sowohl in dem geschützten als auch in dem nichtgeschützten Speicherbereich Schlüssel, also Parameter, die die elliptische Kurve kennzeichnen, abgelegt werden können.
Diese Vorrichtung ist geeignet zur Durchführung des erfindungsgemäßen Verfahrens oder einer seiner vorstehend erläuterten Weiterbildungen.
Weiterbildungen der Erfindung ergeben sich auch aus den abhängigen Ansprüchen.

Anhand der folgenden Figur werden Ausfuhrungsbeispiele der Erfindung näher dargestellt.

Es zeigen

Fig.1 ein Verfahren zur kryptographischen Bearbeitung mittels einer elliptischen Kurve, wobei mindestens ein Parameter der elliptischen Kurve verkürzt wird und somit eine Einsparung eines Teils des für die Parameter der elliptischen Kurve benötigten Speicherbereichs erfolgt;

Fig.2 eine Auswahl von Möglichkeiten für die Primzahl p, so daß der Parameter a der elliptischen Kurve verkürzt wird;

Fig.3 ein Verfahren zur Bestimmung einer elliptischen Kurve und anschließende Transformation in die zweite Form;

Fig.4 eine Anordnung zur kryptographischen Bearbeitung;

Fig.5 eine Prozessoreinheit.

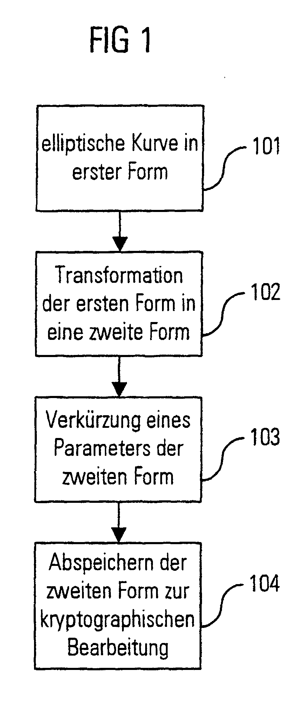

Fig.1 zeigt ein Verfahren zur Bearbeitung mittels einer elliptischen Kurve. Die elliptische Kurve (vgl. Block 101) wird dazu von einer ersten Form in eine zweite Form transformiert (vgl. Block 102), ein Parameter der zweiten Form wird verkürzt (vgl. Block 103) und die zweite Form wird zur kryptographischen Bearbeitung abgespeichert (vgl. Block 104). Nachfolgend wird auf die genannten Schritte eingegangen, wobei einige Möglichkeiten für die Verkürzung beispielhaft herausgegriffen werden.

Es wird beschrieben, wie eine Reduzierung der Länge des Parameters a in der Gleichung der elliptischen Kurve (elliptische Kurve in erster Form, siehe Block 101)

$$y^2 = x^3 + ax + b \text{ über } GF(p) \tag{3}$$

erreicht wird, wobei p insbesondere eine Primzahl größer 3 ist und GF(p) ein Galois-Feld mit p Elementen darstellt.

Eine elliptische Kurve

$$y^2 = x^3 + ax + b \text{ über } GF(p) \tag{4}$$

läßt sich durch Transformation in eine birational isomorphe elliptische Kurve (elliptische Kurve in zweiter Form, siehe Block 102)

$$y^2 = x^3 + c^4ax + c^6b \text{ über } GF(p) \tag{5}$$

überführen. Durch geeignete Wahl der Konstanten c kann der Koeffizient

$$c^4a \qquad \text{bzw.} \tag{6}$$

$$- c^4a \tag{7}$$

verkürzt werden (siehe Block 103) mit dem Vorteil, daß der zur Speicherung dieses Koeffizienten benötigte Speicherplatz im Vergleich zum Speicherplatz für den Parameter a gering sein kann.

Entsprechend Gleichung (5) werden nachfolgend die Zahlen

$$c^4a \qquad (\text{bzw. } - c^4a) \qquad \text{und} \qquad c^2$$

bestimmt.

**1 Bestimmung der Zahl "c$^4$a"**

Zur Bestimmung der Zahl c$^4$a (bzw. - c$^4$a) unterscheidet man bevorzugt die folgenden Fälle:

1.1 p ≡ 3 mod 4

In diesen Körpern gilt:

- alle Quadrate sind auch vierte Potenzen,
- '-1' ist kein Quadrat.

Es sei nun p = 4k + 3 und s eine vierte Potenz, welche die multiplikative Untergruppe der vierten Potenzen (bzw. der Quadrate) in GF(p) erzeugt.

Es ist

$$V = \left\{1, s, s^2, s^3, \ldots, s^{2k}\right\}$$

die Menge der vierten Potenzen in GF(p) und

$$NQ = \left\{-1, -s, -s^2, -s^3, \ldots, -s^{2k}\right\}$$

die Menge der Nichtquadrate in GF(p).

| | | |
|---|---|---|
| 1. | Zu jedem Element existiert ein Element mit | a = s$^t$ aus V<br>c$^4$ = s$^{2k+1-t}$ aus V<br>c$^4$a = s$^{2k+1}$ = 1 in GF(p). |
| 2. | Zu jedem Element existiert ein Element mit | a = -s$^t$ aus V<br>c$^4$ = s$^{2k+1-t}$ aus V<br>c$^4$a = -s$^{2k+1}$ = -1 in GF(p). |

Dabei bezeichnen s, t und k Körperelemente aus GF(p).

Für p ≡ 3 mod 4 läßt sich der Parameter a durch geeignete Wahl der Konstanten c in die Zahl c$^4$a = 1 in GF(p) oder c$^4$a = -1 in GF(p) überführen.

1.2 p ≡ 1 mod 4

In einem solchen Körper gilt:

- (p-1)/4 Elemente der multiplikativen Gruppe des Körpers sind vierte Potenzen;
- (p-1)/4 Elemente der multiplikativen Gruppe des Körpers sind Quadrate, aber keine vierten Potenzen;
- (p-1)/2 Elemente der multiplikativen Gruppe des Körpers sind Nichtquadrate;
- '-1' ist kein Nichtquadrat.

<u>A</u>) p ≡ 5 mod 8
In einem solchen Körper gilt zusätzlich:

- '-1' ist ein Quadrat, aber keine vierte Potenz,
- '+2', '-2' sind Nichtquadrate.

Es sei nun p = 8k + 5 und s eine vierte Potenz, welche die multiplikative Untergruppe der vierten Potenz in GF(p) erzeugt.

Es ist

$$V = \left\{ 1, s, s^2, s^3, \ldots, s^{2k} \right\}$$

die Menge der vierten Potenzen in GF(p) und

$$Q = \left\{ -1, -s, -s^2, -s^3, \ldots, -s^{2k} \right\}$$

die Menge der Quadrate, die keine vierten Potenzen in GF(p) sind und

$$NQ = \left\{ 2, 2s, 2s^2, 2s^3, \ldots, 2s^{2k}, -2, -2s, -2s^2, -2s^3, \ldots, -2s^{2k} \right\}$$

die Menge der Nichtquadrate in GF(p).

| | | | |
|---|---|---|---|
| 1. | Zu jedem Element existiert ein Element mit | $a = s^t$ aus V | $c^4 = s^{2k+1-t}$ aus V $c^4a = s^{2k+1} = 1$ in GF(p). |
| 2. | Zu jedem Element existiert ein Element mit | $a = -s^t$ aus Q | $c^4 = s^{2k+1-t}$ aus V $c^4a = -s^{2k+1} = -1$ in GF(p). |
| 3. | Zu jedem Element existiert ein Element mit | $a = 2s^t$ aus NQ | $c^4 = s^{2k+1-t}$ aus V $c^4a = 2s^{2k+1} = 2$ in GF(p). |
| 4. | Zu jedem Element existiert ein Element mit | $a = -2s^t$ aus NQ | $c^4 = s^{2k+1-t}$ aus V $c^4{}_a = -2s^{2k+1} = -2$ in GF(p). |

Für $p \equiv 5 \bmod 8$ läßt sich der Parameter a durch geeignete Wahl der Konstanten c in die Zahl
$c^4a = 1$ oder $-1$ oder 2 oder $-2$ in GF(p)
überführen.

<u>B)</u> $p \equiv 1 \bmod 8$

Die Zahl $c^4a$ läßt sich nach folgendem Schema ermitteln:

Für r=1,-1,2,-2,3,-3,4,-4,...

- bilde $z \equiv ra^{-1}$ mod p;
- berechne $u \equiv z^{(p-1)/4}$ mod p;
- abbrechen, falls u=1 ist;
- speichere $z = c^4$ und $r = c^4 a$.

**2 Bestimmung der Zahl "$c^2$ in GF(p)"**

Zur Bestimmung der Zahl $c^2$ mod p wird zunächst im entsprechenden Körper GF(p) festgestellt, ob a eine vierte Potenz, ein Quadrat aber keine vierte Potenz oder ein Nichtquadrat ist.

**2.1 p = 4k + 3**

In diesen Körpern wird $u = a^{(p-1)/2}$ in GF(p) berechnet.

- Ist u=1 in GF(p), so ist a eine vierte Potenz (bzw. ein Quadrat). In diesem Fall ist $c^4 = a^{-1}$ in GF(p).
- Ist u=-1 in GF(p), so ist a ein Nichtquadrat. In diesem Fall ist $c^4 = -a^{-1}$ in GF(p).

**2.2 p = 8k + 5**

In diesen Körpern wird $u = a^{(p-1)/4}$ in GF(p) berechnet.

- Ist u=1 in GF(p), so ist a eine vierte Potenz. In diesem Fall ist $c^4 = a^{-1}$ in GF(p).

- Ist u=-1, so ist a ein Quadrat aber keine vierte Potenz. In diesem Fall ist $c^4 = -a^{-1}$ in GF(p).

- Ist u weder 1 noch -1 in GF(p), so ist a ein Nichtquadrat in GF(p). In diesem Fall wird $v = (2a)^{(p-1)/4}$ in GF(p) berechnet. Ist v=1 in GF(p), so ist $c^4 = 2a^{-1}$ in GF(p), sonst ist $c^4 = -2a^{-1}$ in GF(p).

**2.2 p = 8k + 1**

In diesen Körpern ist nach dem in 1.2, Fall B beschriebenen Schema $z = c^4$.
In allen drei Fällen lassen sich mit einem Aufwand von O(log p) die beiden Wurzeln ($c^2$ und $-c^2$) aus $c^4$ berechnen. Für den Fall p = 4k + 3 ist nur eine der beiden angegebenen Lösungen zulässig, nämlich diejenige, die ein Quadrat in GF(p) ist. In den anderen Fällen sind beide Lösungen zulässig. Somit läßt sich der Koeffizient $c^6 b$ der elliptischen Kurve berechnen.
Aufgrund der geschlossenen Formeln für die Fälle p = 4k + 3 und p = 8k + 5 sind in der Praxis derartige Primzahlen zu bevorzugen.

**Beispiel 1:**

Es sei die Primzahl p = 11 $\Rightarrow$ Fall 1.1: p $\equiv$ 3 mod 4

Tabelle 1:

| Quadrate und vierte Potenzen mod 11 | | |
|---|---|---|
| Zahl | Quadrate Q | vierte Potenzen V |
| 1 | 1 | 1 |
| 2 | 4 | 5 |
| 3 | 9 | 4 |
| 4 | 5 | 3 |
| 5 | 3 | 9 |
| 6 | 3 | 9 |
| 7 | 5 | 3 |
| 8 | 9 | 4 |
| 9 | 4 | 5 |
| 10 | 1 | 1 |

Damit ergeben sich die Menge der Quadrate Q, die Menge der vierten Potenzen V und die Menge der Nichtquadrate NQ zu:

Q = V = {1,3,4,5,9};
NQ = {2,6,7,8,10}.
$\underline{a \in V = Q} \Rightarrow ac^4 = 1$

Tabelle 2:

| Bestimmung von $c^4$ bei gegebenem Parameter a | |
|---|---|
| a= | $c^4=$ |
| 1 | 1 |
| 3 | 4 |
| 4 | 3 |
| 5 | 9 |
| 9 | 5 |

$\underline{a \in NQ} \Rightarrow ac^4 = -1$

Tabelle 3:

| Bestimmung von $c^4$ bei gegebenem Parameter a | |
|---|---|
| a= | $c^4=$ |
| 2 | 5 |
| 6 | 9 |
| 7 | 3 |
| 8 | 4 |
| 10 | 1 |

Tabelle 2 zeigt verschiedene Möglichkeiten einer Wertzuordnung von a und $c^4$ auf, die in der Verknüpfung $ac^4$ stets 1 ergeben, und Tabelle 3 zeigt verschiedene Möglichkeiten einer Wertzuordnung von a und $c^4$ auf, die in der Verknüpfung $ac^4$ stets -1 ergeben. Dies gilt in GF(11).

**Beispiel 2:**

Es sei die Primzahl p = 13 $\Rightarrow$ Fall 1.2 A) : p $\equiv$ 1 mod 4 und zugleich p $\equiv$ 5 mod 8.

Tabelle 4:

| Quadrate und vierte Potenzen mod 13 | | |
|---|---|---|
| Zahl | Quadrate Q | vierte Potenzen V |
| 1 | 1 | 1 |
| 2 | 4 | 3 |
| 3 | 9 | 3 |
| 4 | 3 | 9 |
| 5 | 12 | 1 |
| 6 | 10 | 9 |
| 7 | 10 | 9 |
| 8 | 12 | 1 |
| 9 | 3 | 9 |
| 10 | 9 | 3 |
| 11 | 4 | 3 |
| 12 | 1 | 1 |

Damit ergeben sich die Menge der Quadrate Q (die keine vierten Potenzen sind), die Menge der vierten Potenzen V und die Menge der Nichtquadrate NQ zu:

Q = {4,10,12};
V = {1,3,9};
NQ = {2,5,6,7,8,11}.
$\underline{a \in V \Rightarrow c^4 \in V}$

Tabelle 5:

| Bestimmung von $c^4$ bei gegebenem Parameter a | |
|---|---|
| a= | $c^4$= |
| 1 | 1 |
| 3 | 9 |
| 9 | 3 |

$\Rightarrow ac^4 \equiv 1 \bmod 13$
$\underline{a \in Q}$

Tabelle 6:

| Bestimmung von $c^4$ bei gegebenem Parameter a | | |
|---|---|---|
| a= | $c^4$ = | $ac^4$ = |
| 4 | 3 | 12 = **-1** mod 13 |
| 10 | 9 | 90 = **-1** mod 13 |
| 12 | 1 | 12 = **-1** mod 13 |

$\Rightarrow ac^4 \equiv -1 \bmod 13$
$\underline{a \in NQ}$
NQ = {2,5,6,7,8,11}, mit
2*V = {1,5,6} und
2*Q = {7,8,11}
$\underline{\text{Fall a}}$: a $\in$ NQ und a $\in$ (2 * V)

Tabelle 7:

| Bestimmung von $c^4$ bei gegebenem Parameter a | | |
|---|---|---|
| a= | $c^4$ = | $ac^4$ = |
| 2 | 1 | 2 = **2** mod 13 |
| 5 | 3 | 15 = **2** mod 13 |
| 6 | 9 | 54 = **2** mod 13 |

$\Rightarrow ac^4 \equiv 2 \bmod 13$
$\underline{\text{Fall b}}$: a $\in$ NQ und a $\in$ (2 * Q)

Tabelle 8:

| Bestimmung von $c^4$ bei gegebenem Parameter a | | |
|---|---|---|
| a= | $c^4$ = | $ac^4$ = |
| 7 | 9 | 63 = **-2** mod 13 |
| 8 | 3 | 24 = **-2** mod 13 |
| 11 | 1 | 11 = **-2** mod 13 |

$\Rightarrow ac^4 \equiv -2 \bmod 13$

Die auf die beschriebene Art gewonnene elliptische Kurve in der zweiten Form (siehe Block 103) wird zu einer kryptographischen Bearbeitung eingesetzt.

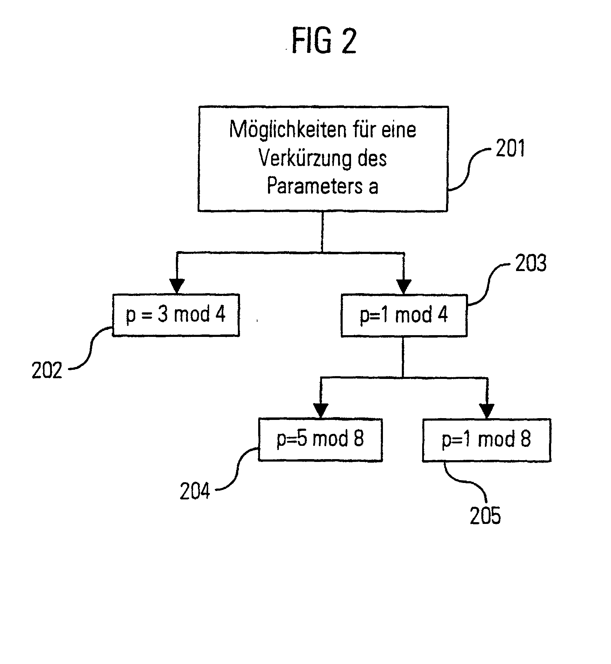

**Fig.2** zeigt eine Auswahl von Möglichkeiten für die Wahl der Primzahl p zur Verkürzung des Parameters a (siehe Block 201), wie oben beschrieben. Die Möglichkeit 202 bestimmt p derart, daß p = 3 mod 4 gilt. In diesem Fall läßt sich der Parameter a anhand oben beschriebener Vorgehensweise verkürzen. Das gleiche gilt für p = 1 mod 4 (Fall 203), wobei eine Fallunterscheidung gesondert die beiden Fälle p = 5 mod 8 (Fall 204) und p = 1 mod 8 (Fall 205) anführt. Die geschlossenen Formulierungen zur Bestimmung eines verkürzten Parameters a sind jeweils oben ausgeführt. Fig.2 zeigt ausdrücklich eine Auswahl von Möglichkeiten auf, ohne einen Anspruch auf eine umfassende Auswahl anzustreben.

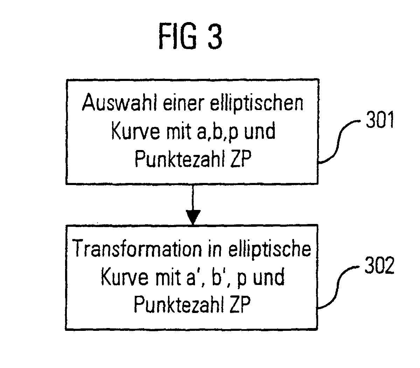

In **Fig.3** wird in einem ersten Schritt 301 eine elliptische Kurve mit den Parametern a, b, p und einer Punktezahl ZP gemäß Gleichung (1) bestimmt. In einem Schritt 302 wird die elliptische Kurve transformiert (vgl. Gleichung (2)). Nach der Transformation umfaßt die elliptische Kurve die Parameter a', b', p und ZP. a' und b' deuten an, daß die Parameter a und b verändert wurden, wobei ein Parameter, vorzugsweise der Parameter a' kurz ist im Vergleich zu dem Parameter a, so daß durch Abspeichern des Parameters a' anstelle des Parameters a als Kennzeichen der elliptischen Kurve Speicherplatz eingespart wird.

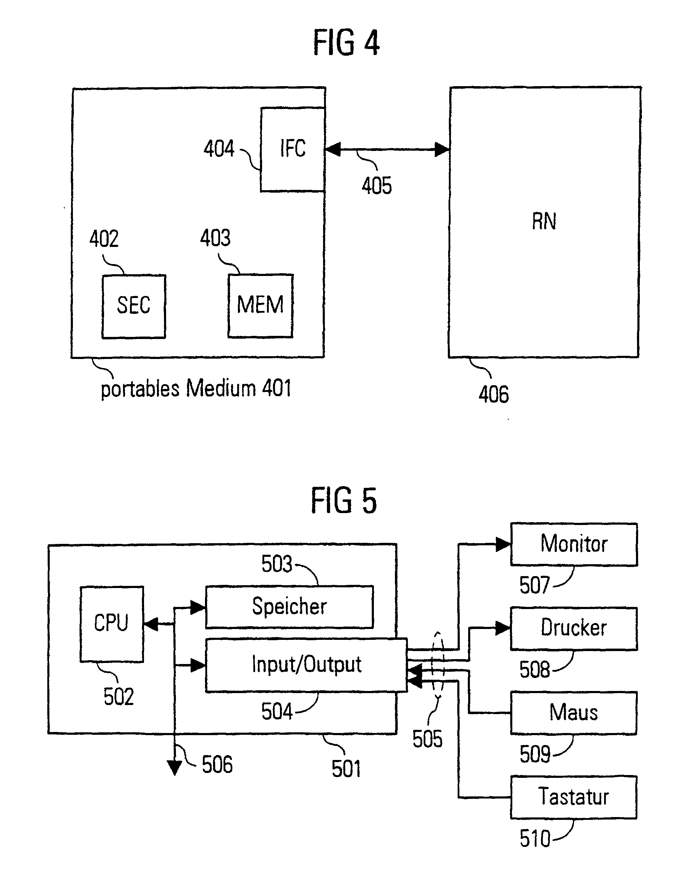

In **Fig.4** ist eine Anordnung zur kryptographischen Bearbeitung dargestellt.

Ein portables Medium 401, vorzugsweise eine Chipkarte, umfaßt einen (unsicheren) Speicherbereich MEM 403 und einen geschützten (sicheren) Speicherbereich SEC 402. Anhand einer Schnittstelle IFC 404 werden über einen Kanal 405 Daten zwischen dem Medium 401 und einem Rechnernetz 406 ausgetauscht. Das Rechnernetz 406 umfaßt mehrere Rechner, die miteinander verbunden sind und untereinander kommunizieren. Daten für den Betrieb des portablen Mediums 401 sind vorzugsweise in dem Rechnernetz RN 406 verteilt verfügbar.

Der geschützte Speicherbereich 402 ist nicht lesbar ausgeführt. Anhand einer Recheneinheit, die auf dem portablen Medium 401 oder im Rechnernetz 406 untergebracht ist, werden die Daten des geschützte Speicherbereichs 402 genutzt. So kann eine Vergleichsoperation als Ergebnis angeben, ob ein Vergleich einer Eingabe mit einem Schlüssel im geschützte Speicherbereich 402 erfolgreich war oder nicht.

Die Parameter der elliptischen Kurve sind in dem geschützten Speicherbereich 402 oder in dem ungeschützten Speicherbereich 403 abgelegt. Insbesondere wird ein geheimer oder privater Schlüssel in dem geschützten Speicherbereich und ein öffentlicher Schlüssel in dem unsicheren Speicherbereich abgespeichert.

In **Fig.5** ist eine Recheneinheit 501 dargestellt. Die Recheneinheit 501 umfaßt einen Prozessor CPU 502, einen Speicher 503 und eine Input/Output-Schnittstelle 504, die über ein aus der Recheneinheit 501 herausgeführtes Interface 505 auf unterschiedliche Art und Weise genutzt wird: Über eine Grafikschnittstelle wird eine Ausgabe auf einem Monitor 507 sichtbar und/oder auf einem Drucker 508 ausgegeben. Eine Eingabe erfolgt über eine Maus 509 oder eine Tastatur 510. Auch verfügt die Recheneinheit 501 über einen Bus 506, der die Verbindung von Speicher 503, Prozessor 502 und Input/Output-Schnittstelle 504 sicherstellt. Weiterhin ist es möglich, an den Bus 506 zusätzliche Komponenten anzuschließen: zusätzlicher Speicher, Festplatte, etc.

Literaturverzeichnis:

[1] Neal Koblitz: A Course in Number Theory and Cryptography, Springer Verlag New York, 1987, ISBN 0-387-96576-9, Seiten 150-179.

[2] Alfred J. Menezes: Elliptic Curve Public Key Cryptosystems, Kluwer Academic Publishers, Massachusetts 1993, ISBN 0-7923-9368-6, Seiten 83-116.

[3] Rudolf Lidl, Harald Niederreiter: Introduction to finite fields and their applications, Cambridge University Press, Cambridge 1986, ISBN 0-521-30706-6, Seiten 15, 45.

[4] Christoph Ruland: Informationssicherheit in Datennetzen, DATACOM-Verlag, Bergheim 1993, ISBN 3-89238-081-3, Seiten 73-85.

[5] MIYAJI A: 'ELLIPTIC CURVES SUITABLE FOR CRYPTOSYSTEMS' IEICE TRANSACTIONS ON FUNDAMENTALS OF ELECTRONICS, COMMUNI-CATIONS AND COMPUTER SCIENCES, Bd. E77-A, Nr. 1, 1. Januar 1994 (1994-01-01), Seiten 98-104, XP000439669 ISSN: 0916-8508

[6] US-A-5 497 423 (MIYAJI ATSUKO) 5. März 1996 (1996-03-05)

**Patentansprüche**

1. Verfahren zur kryptographischen Bearbeitung anhand einer elliptischen Kurve auf einem Rechner,

   a) bei dem die elliptische Kurve in einer ersten Form vorgegeben wird (101), wobei mehrere erste Parameter die elliptische Kurve bestimmen;

   b) bei dem die elliptische Kurve in eine zweite Form

$$y^2 = x^3 + c^4ax + c^6b$$

   transformiert wird, indem mehrere zweite Parameter bestimmt werden (102), wobei mindestens einer der zweiten Parameter in seiner Länge gegenüber dem Korrespondierenden ersten Parameter verkürzt wird, wobei

   x,y    Variablen,
   a,b    die ersten Parameter und
   c       eine Konstante

   bezeichnen;

   c) wobei zumindest der Parameter a verkürzt wird (103), indem die Konstante c derart gewählt wird, daß

$$c^4a \bmod p$$

   deutlich kürzer bestimmt wird als die Länge des Parameters b und die Länge der vorgegebenen Größe p;

   d) bei dem die elliptische Kurve in der zweiten Form zur kryptographischen Bearbeitung bestimmt wird (104).

2. Verfahren nach dem vorhergehenden Anspruch,
   bei dem die erste Form der elliptischen Kurve bestimmt ist durch

$$y^2 = x^3 + ax + b,$$

   wobei

   x,y    Variablen und
   a,b    die ersten Parameter

   bezeichnen.

3. Verfahren nach einem der vorhergehenden Ansprüche,
   bei dem eine kryptographische Verschlüsselung durchgeführt wird.

4. Verfahren nach einem der vorhergehenden Ansprüche,
   bei dem eine kryptographische Entschlüsselung durchgeführt wird.

5. Verfahren nach einem der vorhergehenden Ansprüche,
   bei dem eine Schlüsselvergabe durchgeführt wird.

6. Verfahren nach einem der vorhergehenden Ansprüche,
   bei dem eine digitale Signatur durchgeführt wird.

7. Verfahren nach Anspruch 6,
   bei dem eine Verifikation der digitalen Signatur durchgeführt wird.

**8.** Verfahren nach einem der vorhergehenden Ansprüche,
bei dem eine asymmetrische Authentikation durchgeführt wird.

**9.** Vorrichtung zur kryptographischen Bearbeitung,
mit einer Prozessoreinheit (501), die derart eingerichtet ist, daß

a) eine elliptische Kurve in einer ersten Form vorgegeben wird (101), wobei mehrere erste Parameter die elliptische Kurve bestimmen;

b) die elliptische Kurve in eine zweite Form

$$y^2 = x^3 + c^4ax + c^6b$$

transformiert wird (102), indem mehrere zweite Parameter bestimmt werden, wobei mindestens einer der zweiten Parameter in seiner Länge gegenüber dem korrespondierenden ersten Parameter verkürzt wird, wobei

x,y     Variablen,
a,b     die ersten Parameter und
c       eine Konstante

bezeichnen;

c) zumindest der Parameter a verkürzt wird (103), indem die Konstante c derart gewählt wird, daß

$$c^4a \bmod p$$

deutlich kürzer bestimmt wird als die Länge des Parameters b und die Länge der vorgegebenen Größe p;

d) die elliptische Kurve in der zweiten Form zur kryptographischen Bearbeitung bestimmt wird (104).

**10.** Vorrichtung nach Anspruch 9,
bei der die Vorrichtung eine Chipkarte (401) mit einem Speicherbereich (403) ist, wobei in dem Speicherbereich die Parameter der elliptischen Kurve abspeicherbar sind..

**11.** Vorrichtung nach Anspruch 10,
bei dem ein geheimer Schlüssel in einem geschützten Speicherbereich (402) der Chipkarte abspeicherbar ist.

**Claims**

**1.** Method for cryptographic processing with the aid of an elliptic curve on a computer,

a) in the case of which the elliptic curve is prescribed (101) in a first form, several first parameters determining the elliptic curve;

b) in the case of which the elliptic curve is transformed into a second form

$$y^2 = x^3 + c^4ax + c^6b$$

by determining (102) several second parameters, at least one of the second parameters being shortened in length by comparison with the corresponding first parameter,

x, y     denoting variables,
a,b     denoting the first parameters, and

c       denoting a constant;

c) at least the parameter a being shortened (103) by selecting the constant c in such a way that

$$c^4a \bmod p$$

is determined to be much shorter than the length of the parameter b and the length of the prescribed variable p; and

d) in the case of which the elliptic curve is determined (104) in the second form for the purpose of cryptographic processing.

2. Method according to one of the preceding claims, in the case of which the first form of the elliptic curve is determined by

$$y^2 = x^3 + ax + b,$$

x, y      denoting variables, and
a, b      denoting the first parameters.

3. Method according to one of the preceding claims, in the case of which cryptographic encoding is carried out.

4. Method according to one of the preceding claims, in the case of which cryptographic decoding is carried out.

5. Method according to one of the preceding claims, in the case of which a key allocation is carried out.

6. Method according to one of the preceding claims, in the case of which a digital signature is carried out.

7. Method according to Claim 6, in the case of which a verification of the digital signature is carried out.

8. Method according to one of the preceding claims, in the case of which an asymmetrical authentication is carried out.

9. Device for cryptographic processing, having a processor unit (501) which is set up in such a way that

a) an elliptic curve is prescribed (101) in a first form, several first parameters determining the elliptic curve;

b) the elliptic curve is transformed (102) into a second form

$$y^2 = x^3 + c^4ax + c^6b$$

by determining several second parameters, at least one of the second parameters being shortened in length by comparison with the corresponding first parameter,

x, y      denoting variables,
a,b      denoting the first parameters, and
c      denoting a constant;

c) at least the parameter a being shortened (103) by selecting the constant c in such a way that

$$c^4a \bmod p$$

is determined to be much shorter than the length of the parameter b and the length of the prescribed variable p; and

d) the elliptic curve is determined (104) in the second form for the purpose of cryptographic processing.

**10.** Device according to Claim 9, in the case of which the device is a chip card (401) with a memory area (403), it being possible to store the parameters of the elliptic curve in the memory area.

**11.** Device according to Claim 10, in the case of which a secret key can be stored in a protected memory - area (402) of the chip card.

**Revendications**

**1.** Procédé pour le traitement cryptographique à l'aide d'une courbe elliptique sur un ordinateur,

a) dans lequel on prescrit (101) la courbe elliptique sous une première forme, plusieurs premiers paramètres déterminant la courbe elliptique ;
b) dans lequel on transforme la courbe elliptique sous une deuxième forme

$$y^2 = x^3 + c^4ax + c^6b$$

en déterminant (102) plusieurs deuxièmes paramètres, au moins l'un des deuxièmes paramètres ayant une longueur réduite par rapport au premier paramètre correspondant,
dans lequel

x, y     étant des variables,
a, b     les premiers paramètres, et
c       une constante ;

c) dans lequel on réduit (103) au moins le paramètre a en choisissant la constante c de telle sorte que

$$c^4a \bmod p$$

est déterminé beaucoup plus court que la longueur du paramètre b et que la longueur de la grandeur p prédéterminée ;
d) dans lequel on détermine (104) la courbe elliptique sous la deuxième forme pour le traitement cryptographique.

**2.** Procédé selon la revendication précédente, dans lequel la première forme de la courbe elliptique est déterminée par

$$y^2 = x^3 + ax + b$$

dans lequel

x, y     étant des variables et
a, b     les premiers paramètres.

**3.** Procédé selon l'une des revendications précédentes, dans lequel on effectue un codage cryptographique.

**4.** Procédé selon l'une des revendications précédentes, dans lequel on effectue un décodage cryptographique.

**5.** Procédé selon l'une des revendications précédentes, dans lequel on effectue une prescription de clé.

**6.** Procédé selon l'une des revendications précédentes, dans lequel on effectue une signature numérique.

**7.** Procédé selon la revendication 6, dans lequel on effectue une vérification de la signature numérique.

**8.** Procédé selon l'une des revendications précédentes, dans lequel on effectue une authentification asymétrique.

**9.** Dispositif pour le traitement cryptographique avec une unité à processeur (501) qui est conçue de telle sorte que

a) Une courbe elliptique est prescrite (101) sous une première forme, plusieurs premiers paramètres déterminant la courbe elliptique ;
b) la courbe elliptique est transformée (102) sous une deuxième forme

$$y^2 = x^3 + c^4ax + c^6b$$

en déterminant plusieurs deuxièmes paramètres, au moins l'un des deuxièmes paramètres ayant une longueur réduite par rapport au premier paramètre correspondant,
dans lequel

x, y     étant des variables,
a, b     les premiers paramètres, et
c         une constante ;

c) au moins le paramètre a est réduit (103) en choisissant la constante c de telle sorte que

$$c^4a \bmod p$$

est déterminé beaucoup plus court que la longueur du paramètre b et que la longueur de la grandeur p prédéterminée ;
d) dans lequel la courbe elliptique est déterminée (104) sous la deuxième forme pour le traitement cryptographique.

**10.** Dispositif selon la revendication 9, dans lequel le dispositif est une carte à puce (401) avec une zone de mémoire (403), les paramètres de la courbe elliptique pouvant être mémorisés dans la zone de mémoire.

**11.** Dispositif selon la revendication 10, dans lequel une clé secrète peut être mémorisée dans une zone de mémoire protégée (402) de la carte à puce.

# FIG 1

```
┌─────────────────┐
│ elliptische Kurve in │ ⌐ 101
│   erster Form        │
└─────────────────┘
         │
         ▼
┌─────────────────┐
│  Transformation      │ ⌐ 102
│ der ersten Form in   │
│  eine zweite Form    │
└─────────────────┘
         │
         ▼
┌─────────────────┐
│  Verkürzung eines    │ ⌐ 103
│  Parameters der      │
│  zweiten Form        │
└─────────────────┘
         │
         ▼
┌─────────────────┐
│ Abspeichern der      │ ⌐ 104
│ zweiten Form zur     │
│ kryptographischen    │
│   Bearbeitung        │
└─────────────────┘
```

FIG 2

```
                    ┌──────────────────────┐
                    │ Möglichkeiten für eine│
                    │   Verkürzung des      │──── 201
                    │   Parameters a        │
                    └──────────────────────┘
                              │
              ┌───────────────┴───────────────┐
              ▼                                ▼
      ┌──────────────┐                ┌──────────────┐─── 203
      │ p = 3 mod 4  │                │  p=1 mod 4   │
      └──────────────┘                └──────────────┘
   202 ─┘                                    │
                              ┌──────────────┴──────────────┐
                              ▼                             ▼
                      ┌──────────────┐              ┌──────────────┐
                      │  p=5 mod 8   │              │  p=1 mod 8   │
                      └──────────────┘              └──────────────┘
                   204 ─┘                           └─── 205
```

# FIG 3

| |
|---|
| Auswahl einer elliptischen Kurve mit a,b,p und Punktezahl ZP |

— 301

| |
|---|
| Transformation in elliptische Kurve mit a', b', p und Punktezahl ZP |

— 302

# FIG 4

portables Medium 401

# FIG 5